(19) **Europäisches Patentamt**
**European Patent Office**
**Office européen des brevets**

(11) **EP 3 520 294 B1**

(12) **EUROPEAN PATENT SPECIFICATION**

(45) Date of publication and mention
of the grant of the patent:
**23.12.2020 Bulletin 2020/52**

(51) Int Cl.:
**H04L 5/00** (2006.01)

(21) Application number: **17784102.0**

(22) Date of filing: **25.09.2017**

(86) International application number:
**PCT/US2017/053334**

(87) International publication number:
**WO 2018/064003 (05.04.2018 Gazette 2018/14)**

(54) **NON-ORTHOGONAL CONTROL CHANNEL DESIGN FOR WIRELESS COMMUNICATION SYSTEMS**

ENTWURF VON NICHT-ORTHOGONALEN STEUERKANÄLEN FÜR DRAHTLOSE KOMMUNIKATIONSSYSTEME

CONCEPTION DES CANAUX DE CONTRÔLE NON-ORTHOGONAUX POUR DES SYSTÈMES DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2016 US 201662401052 P**
**02.11.2016 US 201662416286 P**
**06.01.2017 US 201762443198 P**
**22.03.2017 US 201762474914 P**

(43) Date of publication of application:
**07.08.2019 Bulletin 2019/32**

(73) Proprietor: **IDAC Holdings, Inc.**
**Wilmington, Delaware 19809 (US)**

(72) Inventors:
• **TAHERZADEH BOROUJENI, Mahmoud**
**San Diego, CA 92122 (US)**
• **NAYEB NAZAR, Shahrokh**
**San Diego, CA 92130 (US)**

(74) Representative: **Parker, Andrew James**
**Meissner Bolte Patentanwälte**
**Rechtsanwälte Partnerschaft mbB**
**Widenmayerstraße 47**
**80538 München (DE)**

(56) References cited:
**EP-A1- 2 439 984**

• **ETRI: "Low code rate and signature based multiple access scheme for New Radio", 3GPP DRAFT; R1-164869 , vol. RAN WG1, no. Nanjing, China; 20160523 - 20160527 13 May 2016 (2016-05-13), XP051096707, Retrieved from the Internet: URL:http://www.3gpp.org/ftp/tsg_ran/WG1_RL 1/TSGR1_85/Docs/ [retrieved on 2016-05-13]**
• **NTT DOCOMO: "Candidate non-orthogonal multiplexing access scheme", 3GPP DRAFT; R1-153333 , vol. RAN WG1, no. Fukuoka, Japan; 20150525 - 20150529 16 May 2015 (2015-05-16), XP050974014, Retrieved from the Internet: URL:http://www.3gpp.org/ftp/tsg_ran/WG1_RL 1/TSGR1_81/Docs/ [retrieved on 2015-05-16]**

**Description**

**CROSS-REFERENCE TO RELATED APPLICATIONS**

This application claims the benefit of U.S. Provisional Patent Application No. 62/401,052, filed September 28, 2016, U.S. Provisional Patent Application No. 62/416, 286, filed November 02, 2016, U.S. Provisional Patent Application No. 62/443, 198, filed January 06, 2017, U.S. Provisional Patent Application No. 62/474, 914, filed March 22, 2017.

**BACKGROUND**

Mobile communications continue to evolve. A fifth generation of mobile communication may be referred to as 5G new radio (NR). A previous (legacy) generation of mobile communication may be, for example, fourth generation (4G) long term evolution (LTE).

The patent application EP 2 439 984 A1 (ALCATEL LUCENT [FR]) 11 April 2012 (2012-04-11) discloses a method for mitigating interference on a physical downlink control channel used by at least two cells (a macro cell and a low-power cell), wherein a distribution of a number of control channel elements of the physical downlink control channel among the cells is performed. It further hints at the possibility of performing a partitioning of the CCEs in a non-orthogonal way, i.e. at least part of the (logical) CCEs may be used by both cells. To avoid performance degradation, it is suggested to determine a set of cell identifiers and assign at least one cell identifier of the determined set of cell identifiers to at least one of the cells for performing transmissions on the PDCCH.

**SUMMARY**

A wireless transmit/receive unit (WTRU) may be configured to determine a use case scenario such as a ultra-reliable low latency (URLLC) or massive machine type communication (mMTC) scenario. The WTRU may be signaled or configured to determine multiple physical downlink control channel (PDCCH) candidates for the WTRU. The WTRU may use a hashing function to determine the PDCCH candidates for the WTRU. The PDCCH candidates may be mapped to multiple control channel elements (CCEs). The CCEs may be mapped to resource element groups (REGs). Some CCEs of the plurality of CCEs may overlap at a resource element (RE) or a REG. For example, the overlapping CCEs may include a RE being assigned to a position that is common to the CCEs. The position that is common to the CCEs may be a slot.

The WTRU may blind-detect an active PDCCH for the WTRU using interference cancellation. For example, the WTRU may know the mapping of the PDCCH candidates to the CCEs and the mapping of the CCEs to REGs. The WTRU may use the determined mappings to mitigate interference from an active overlapping CCE of a PDCCH for another WTRU. A RE of the active overlapping CCE of the PDCCH for the other WTRU may have a position that is common to a RE of the active CCE of the PDCCH for the WTRU. The WTRU may decode the active CCE of the PDCCH for the WTRU for control information. The WTRU may decode REs in slots assigned to carry the control information within the active CCE. The WTRU may then transmit based on the control information.

Aspects of the present invention are provided in the independent claims. Preferred embodiments are provided in the dependent claims.

The present invention is defined by the appended claims and limited only by their scope. Any embodiment and/or aspect (of the invention and/or disclosure) referred to in this description and not fully falling within the scope of said appended claims is to be interpreted as an example useful for understanding the present invention.

**BRIEF DESCRIPTION OF THE DRAWINGS**

Furthermore, like reference numerals in the figures indicate like elements, and wherein:

FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates an example of orthogonal mapping of new radio resource element groups (NR-REGs) to resource elements (REs).

FIG. 3 illustrates an example of non-orthogonal mapping of NR-control channel element control channel elements (CCEs) to orthogonal NR-REGs.

FIG. 4 illustrates an example of mapping NR-REGs to REs based on a time division multiplexing (TDM) design for multiplexing of control channel and data.

FIG. 5 illustrates an example of overlapping NR-CCEs that share a physical resource block (PRB).

FIG. 6 illustrates an example of a mixture of frequency division multiplexing (FDM) and TDM for multiplexing of control channel and data.

FIG. 7 illustrates an example of an aggregation of CCEs where corresponding REGs of the aggregated of CCEs become close to each other.

FIG. 8 illustrates an example of non-orthogonal mapping of NR-REGs to REs.

FIG. 9 illustrates an example of sharing a PRB among CCEs using TDM.

FIG. 10 illustrates an example of power-domain non-orthogonal control channel multiplexing.

FIG. 11 illustrates an example of time-domain spreading for a control channel, using direct sequence code division multiple access (DS-CDMA).

FIG. 12 illustrates an example schematic overview of a WTRU implementation using a non-orthogonal physical downlink control channel (PDCCH).

## DETAILED DESCRIPTION

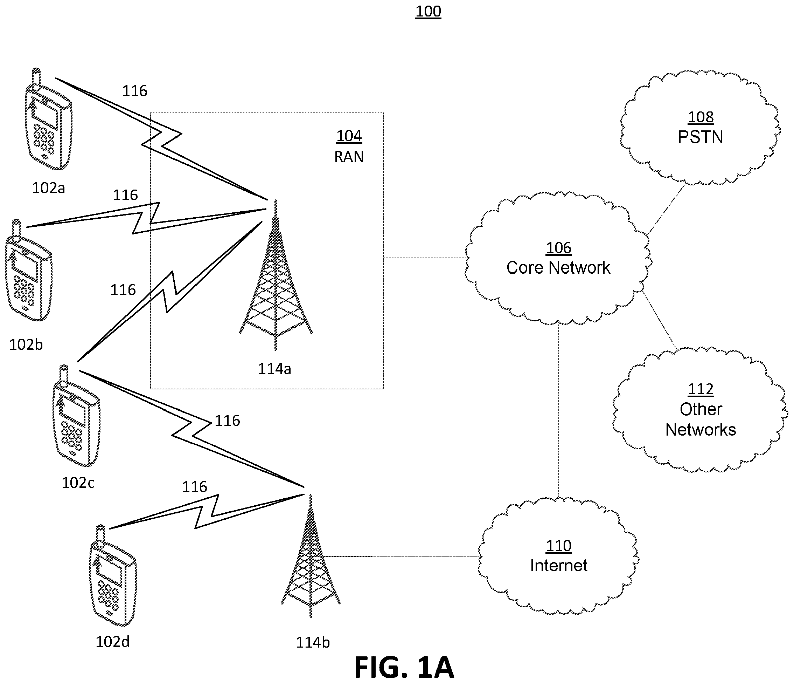

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

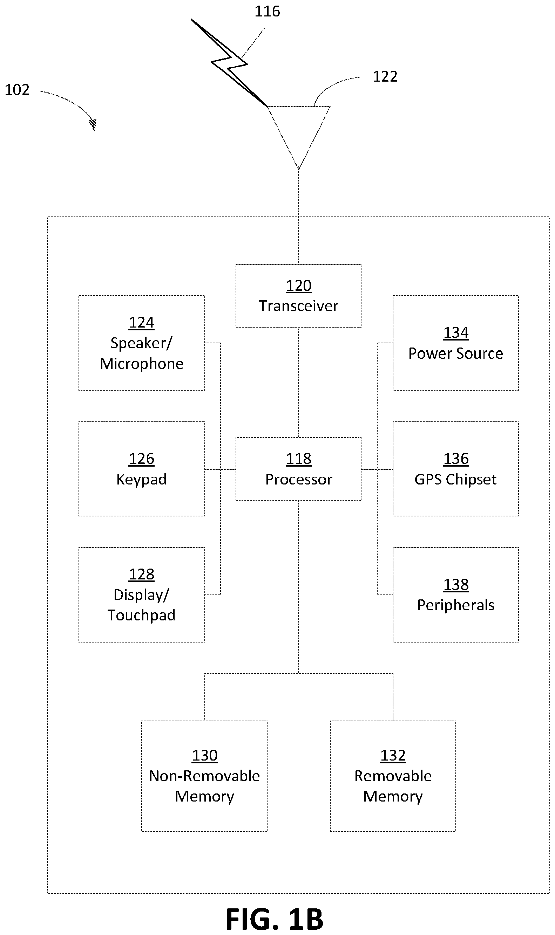

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

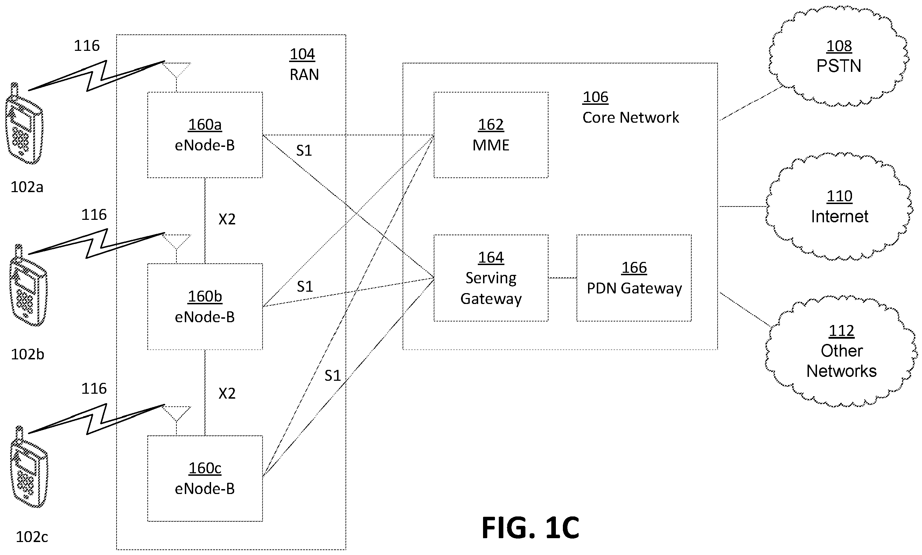

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11afand 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

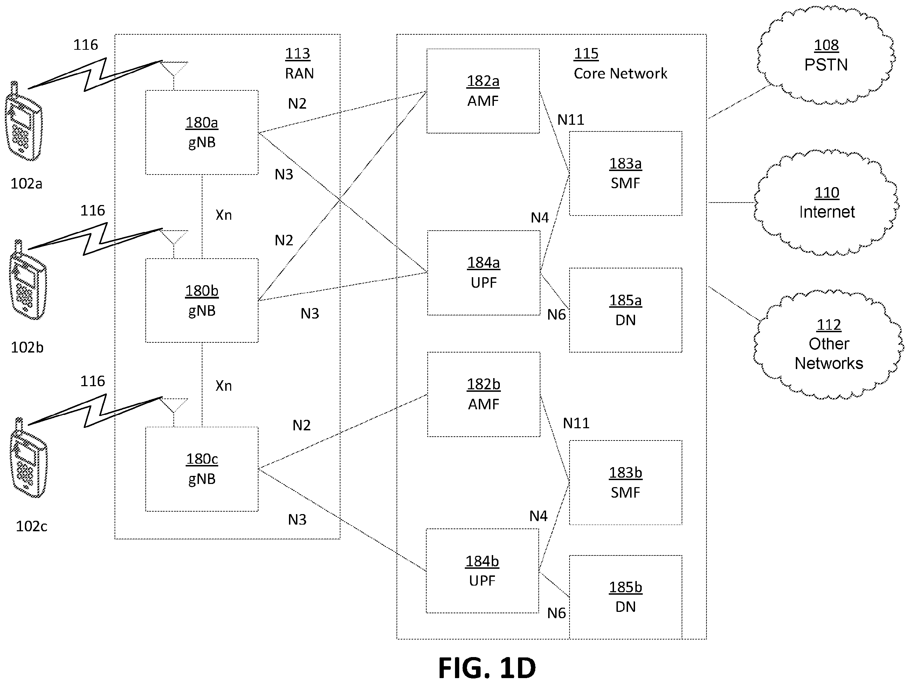

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Enhanced dedicated physical control channel (EDPCCH) may be used for a downlink control channel of LTE Advanced. An EDPCCH may divide resources between data and control. For example, frequency division duplex (FDD) may be used to divide resources for data and/or control. For example, in frequency tones assigned for a control channel, an EDPCCH may be transmitted on resources other than a beginning three or four OFDM symbols of a subframe. An EDPCCH may be spread across resources of a subframe. A FDD used for EPDCCH may provide one or more of higher and/or scalable capacity, support of frequency-domain inter-cell interference coordination, improved spatial reuse (e.g., multiple-input and multiple-output (MIMO)), support of beamforming and diversity, support of frequency-selective scheduling, or coexistence on the same carrier as a legacy WTRU.

In new radio (NR) for fifth generation (5G) wireless systems, different usage scenarios may be envisioned. Different usage scenarios may imply different latency, reliability, coverage, and/or capacity for a control channel. For NR, a control channel may be developed for enhanced mobile broadband (eMBB), massive machine type communication (mMTC), and/or ultra-reliable low latency communication (URLLC).

Serving a number of users may increase a size of control channel region and/or increase blocking probability. mMTC may be implemented using relaxed reliability requirements for a control channel as compared to control channels used for other purposes.

URLLC may adhere to low latency and/or high reliability requirements. The number of users may not be great for URLLC. To satisfy the high reliability and/or low latency requirements, the control channel (e.g., a physical control channel) may have a small blocking probability. The blocking probability may include a probability that no control channel is assigned to a user that uses service(s).

When used herein, the term reference symbol may be used to denote a symbol that may be fixed and/or known and/or used as a pilot. For example, a complex number may be used to generate a reference symbol. A reference signal may be used to denote a time domain signal. The time domain signal may be generated after processing the reference symbols. In an example of OFDM, reference symbols may include complex numbers. The complex numbers may be fed into an inverse discrete Fourier transform (IDFT) block. A reference signal may include an output of the IDFT block. Resource elements (RE) may be defined as a portion of an OFDM symbol that is included on a subcarrier. A resource element group (REG) may include a group of REs used as building blocks of a control channel element (CCE). The CCE may assign REs to a user. New radio resource element groups (NR-REGs), NR-CCE, and non-orthogonal physical downlink control channel (NR-PDCCH) may refer to REG, CCE, and PDCCH for the new radio (NR) in 5G. WTRUs and users may be used interchangeably.

Non-orthogonal multiplexing of control channels for different users may increase user multiplexing capabilities for downlink (DL) and/or uplink (UL). Non-orthogonal multiplexing of control channels for different users may avoid user blocking and/or reducing blocking probability. The user blocking probability may be the probability that no control resources are assigned to a user that is in need of services.

Non-orthogonal multiplexing of control channels may use partial overlapping of resources (e.g., resource elements of physical down link control (PDCCH)). The number of users that are allowed on a set of resources may increase using partial overlapping of the resource. In an example, a set of resources may include 16 NR-REGs. The 16 NR-REGs may be used for 4 orthogonal NR-CCEs and/or more than 4 (e.g., 16) non-orthogonal NR-CCEs if each NR-CCE includes 4 NR-REGs. The orthogonal NR-CCEs may be disjointed. One or more of the non-orthogonal NR-CCEs may overlap (e.g., totally or partially). The number of non-orthogonal NR-CCEs that the 16 NR-REGs allow may depend on the extent to which one or more of the non-orthogonal NR-CCEs overlap with each other. The greater the extent of the overlapping, the greater number of non-orthogonal NR-CCEs a same set of resources may allow. One or more restrictions may apply to the extent of the overlapping. For example, one or more of the non-orthogonal NR-CCEs may overlap such that users of the non-orthogonal NR-CCEs are still able to accurately detect which NR-CCEs to associate with.

Although one or more of the non-orthogonal NR-CCEs overlap with each other, a user may have the knowledge of the overlapping pattern and/or which NR-CCEs may overlap. Based on the knowledge of the overlapping pattern and/or which NR-CCEs may overlap, a user may use interference cancellation, e.g., to maintain the accuracy of detection and/or reduce detection errors.

The user may gain knowledge of a mapping between the NR-CCEs and a set of resources. The knowledge of a mapping between the NR-CCEs and the set of resources may indicate and/or include information about overlapping NR-CCEs.

A signature-based non-orthogonal control channel may be used for non-orthogonal multiplexing of a control channel. A signature(s) may be assigned to an active user(s) and/or used for allocation of resources to the active user(s). The signatures may be associated with resources that overlap (e.g., overlapping signatures). For example, control resources may be divided according to the overlapping signature(s).

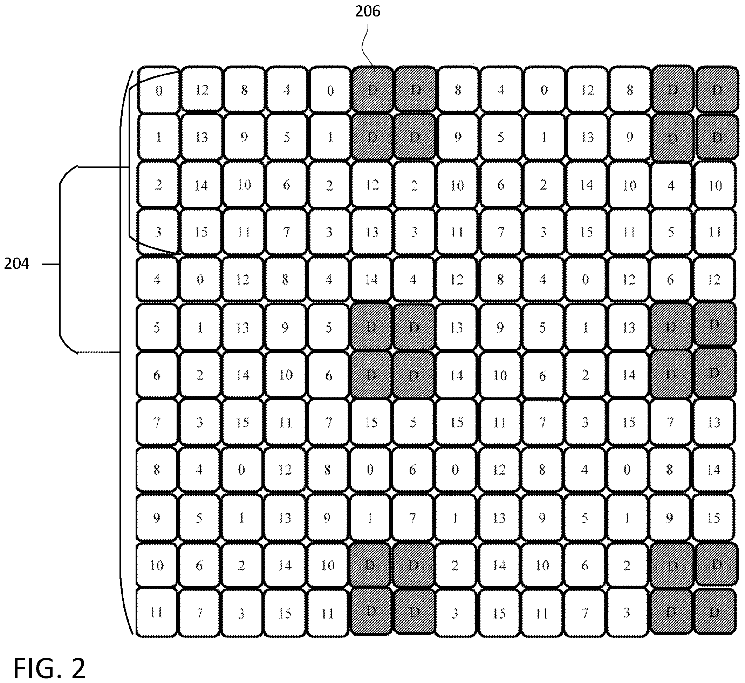

Signature-based non-orthogonal CCEs may be used for NR-PDCCH. For example, the non-orthogonal CCEs may comprise one or more NR-REGs. The one or more NR-REGs may be orthogonal. An orthogonal resource element group(s) (REGs) (e.g., NR-REG) may be mapped to a subset of resource elements (REs) or subsets of REs. The subsets of REs may be disjointed. FIG. 2 may illustrate an example of orthogonal mapping of NR-REGs to REs.. An RE may be used for dynamic modulation reference signal (e.g., DMRS 206). As shown in FIG. 2, the REG 204 may include REs 0-15. The REG 204 and an REG that comprises another 0-15 REs may be disjointed. In the example shown in FIG. 2, the REG 204 and the REG that comprises another 0-15 REs may not overlap.

Division between a data channel and a control channel may use frequency division multiplexing (FDM) and/or time division multiplexing (TDM). Division between a data channel and a control channel may use a mixture of FDM and TDM. For example, if the control channel is sent on a frequency subband or subbands (e.g., only on a frequency subband or subbands), and in that subband/subbands the control channel may be multiplexed with data in time (e.g., using TDM).

A non-orthogonal CCE may be used for NR-PDCCH, for example, based on a FDM, TDM, and/or a mixture of FDM and TDM.

A non-orthogonal CCE may be used for NR-PDCCH based on a FDM design. The non-orthogonal CCE may include REGs (e.g., orthogonal REGs). The orthogonal REGs (e.g., NR-REG) may be mapped to REs according to the example of orthogonal mapping of NR-REGs to REs shown in FIG. 2, similar to techniques (e.g., an enhanced PDCCH (EPDCCH) design) used in long term evolution (LTE) Advanced.

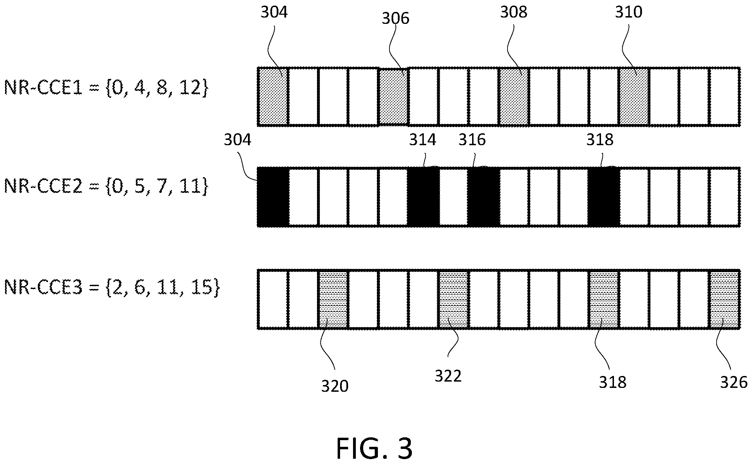

Non-orthogonal CCEs (e.g., NR-CCEs) may overlap on one or more REs and/or map to one or more NR-REGs. FIG. 3 may illustrate an example of non-orthogonal mapping of NR-CCEs to orthogonal NR-REGs, e.g., different CCEs may share one or more REGs. As shown in FIG. 3, a set of resources may include 16 NR-REGs, and a subset (e.g., 4) of 16 NR-REGs may be allocated to NR-CCE1, NR-CCE2, or NR-CCE3. Some of NR-CCE1, NR-CCE2, or NR-CCE3 may overlap. For example, NR-CCE1 may be allocated NR-REGs 304, 306, 308, and 310. NR-CCE2 may be allocated NR-REGs 312, 314, 316, and 318, and/or NR-CCE3 may be allocated NR-REGs 320, 322, 324, and 326. An NR-REG may include one or more (e.g., 9) REs. In one or more examples, the resources 304 -326 may represent one or more slots. In one or more examples, the resources 304 -326 may represent one or more PRBs.

An NR-CCE may identified, for example, by a position or a series of position(s) and/or a location(s) of the NR-REGs assigned to the NR-CCE, As shown in FIG. 3, NR-CCE1 may be associated with the number {0, 4, 8, 12}, which is respectively the location of the REGs 304, 306, 308, and 310. Similarly, NR-CCE2 may be associated with the number {0, 5, 7, 11}, and NR-CCE3 may be associated with the number {2, 6, 11, 15}.

A WTRU may have a knowledge of the non-orthogonal mapping of NR-CCEs to orthogonal NR-REGs. For example, the WTRU may have a knowledge of the non-orthogonal mapping of NR-CCEs to orthogonal NR-REGs from the network and/or determine the non-orthogonal mapping. The WTRU may have a knowledge that one or more non-orthogonal NR-CCEs may overlap with each other when assigned to an active user. The one or more non-orthogonal NR-CCEs may overlap on a resource or a set of resources. A position and/or location of the resource (e.g., a resource element) or the set of the resources may be common to the overlapping NR-CCEs. As shown in FIG. 3, the overlapping CCEs may overlap by a NR-REG. NR-CCE1 and NR-CCE2 may share NR-REG 304 indicated by position 0. NR-CCE2 and NR-CCE3 may share NR-REG 318 indicated by position 11.

A WTRU may gain knowledge of the non-orthogonal mapping of NR-CCEs to orthogonal NR-REGs, for example, via a signature(s). For example, the WTRU may gain the knowledge of the mapping (e.g., the mapping shown in FIG. 3) during configuration. The WTRU may configured with the knowledge that NR-CCE1 may be allocated NR-REGs 304, 306, 308, and 310 when assigned to an active user. NR-CCE2 may be allocated NR-REGs 312, 314, 316, and 318, and/or NR-CCE3 may be allocated NR-REGs 320, 322, 324, and 326 when assigned to an active user. The WTRU may be configured with the knowledge that NR-CCE1 and NR-CCE2 may share NR-REG 304 indicated by position 0, and that NR-CCE2 and NR-CCE3 may share NR-REG 318 indicated by position 11. The WTRU may use the knowledge of the mapping and/or knowledge of mapping of NR-CCEs to NR-PDCCH when performing blind decoding.

For a WTRU, a group of REs and/or NR-REGs may be assigned based on a corresponding signature of the WTRU. The WTRU may receive the signature during configuration and/or semi-statically via higher-layer signaling. For example, the signature may be a sequence of 1s and 0s, of a length of the number of NR-REGs. As an example, NR-REGs may be defined the same as enhanced resource element group (EREGs) in EDPCCH design of LTE Advanced (e.g., as shown in FIG. 2). As shown in FIG. 3, 16 NR-REGs may be used so the length of the number of NR-REGs may be 16. A NR-REG may include nine (9) REs. The WTRU's signature may include a sequence of binary bits 1s and 0s of length 16.

A NR-CCE may be assigned to the WTRU. The NR-CCE may include the group of the REs and/or the NR-REGs corresponding to the WTRU's signature. For example, the signature 1001000000000011 may correspond to a NR-CCE with indices of {0, 3, 14, 15}. The indices may correspond to positions and/or locations of the 1s in the sequence. NR-CCE1, NR-CCE2, and/or NR-CCE2 as shown in FIG. 3 may be respectively associated with a signature 1000100010001000, 1000010100010000, and/or 0010001000010001. The signatures 1000100010001000, 1000010100010000, and/or 0010001000010001 may indicate that NR-CCE1 and NR-CCE2 overlap on an NR-REG (e.g., REG 0), and/or that NR-CCE2 and NR-CCE3 overlap on a NR-REG (e.g., REG 11). The number of the 1s in the sequence may vary. The number of 1s in the signature may depend on a coverage for the WTRU.

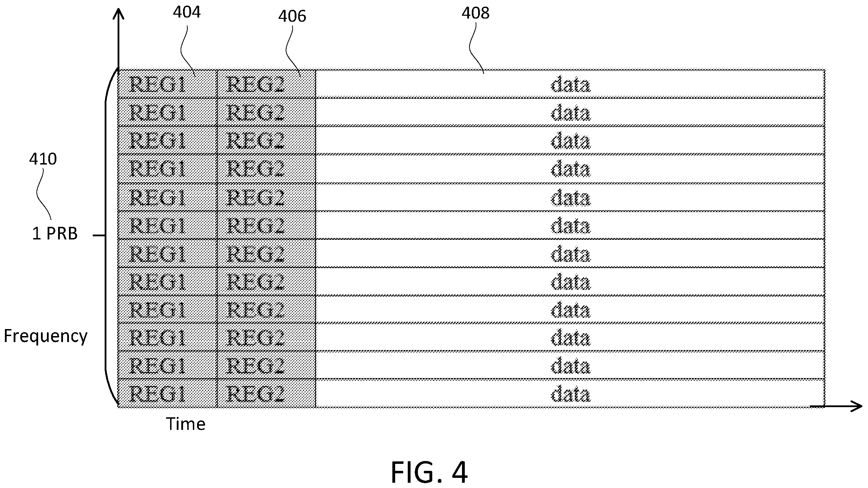

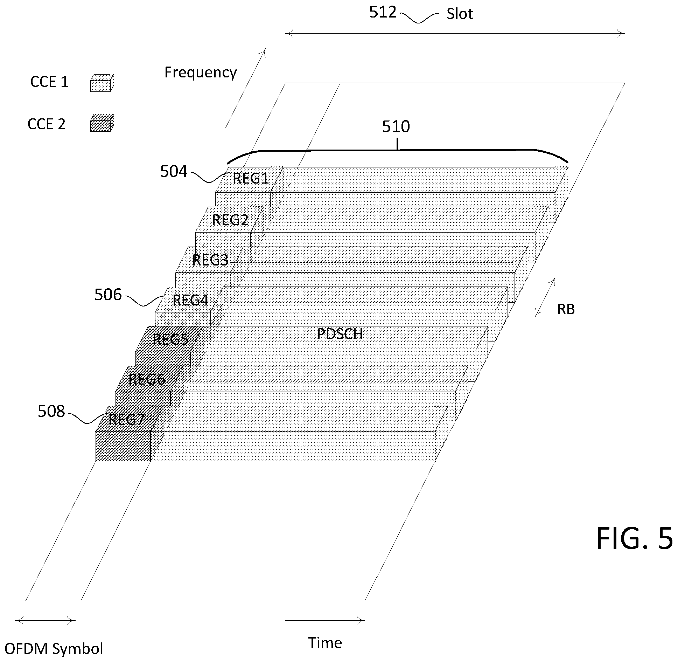

Non-orthogonal CCEs may be used for NR-PDCCH, e.g., based on the TDM. TDM may be used for multiplexing a control channel and/or a data channel. Approaches discussed herein may be used to map NR-CCEs to NR-REGs. Different designs may be used for NR-REGs. The control channel may cover one or more OFDM symbols of a frame/subframe/slot/mini-slot. For example, the control channel may cover the first one or more OFDM symbols of a frame/subframe/slot/mini-slot on a frequency tone. An NR-REG may comprise a subset of corresponding OFDM symbols on a subset of frequency tones. The subset of frequency tones may include a physical resource block (PRB) and/or a subset of PRBs and/or multiple PRBs. FIG. 4 may be an example of mapping NR-REGs to REs based on a TDM design for multiplexing of control channel and data. For example, as shown in FIG. 4 and/or FIG. 5, an NR-REG may be a set of first OFDM symbols of frame/subframe/slot/mini-slots on a PRB. Another NR-REG may be a set of corresponding OFDM symbols on a PRB (e.g., the second OFDM symbols of frame/subframe/slot/mini-slots on a PRB). As shown in FIG. 4, on a PRB 410, REG 1 may use resources including a set of slots 404, and REG 2 may use resources including a set of slots 406. Resources 408 may be used for data. As shown in FIG. 5, a slot 512 may include one or more resource blocks (e.g., resource block 510). A resource block as shown in FIG. 5 may include a control channel and a shared channel. REGs 1-7 may be included in the control channel. REGs 1-7 may include the first one or more OFDM symbols of resource blocks. REGs 1-7 may be included in different CCEs. For example, CCE1 may include 504 REG1- 506 REG4, and CCE2 may include 506 REG4 - 508 REG7. As shown in FIG. 5, CCE1 and CCE2 may overlap at 506 REG 4. For example both CCE1 and CCE 2 may include 506 REG 4. CCE1 and CCE2 may be included in different control regions.

One or more NR-CCEs may be assigned as a NR-PDCCH candidate for a WTRU, e.g., to achieve a better coverage. For example, the WTRU may gain the knowledge of a mapping of the one or more NR-CCEs to a NR-PDCCH candidate (e.g., for the WTRU). The WTRU may receive the mapping from the network, e.g., when associating with a gNodeB. The number of NR-CCEs in a NR-PDCCH candidate (e.g., an aggregation level) may be chosen (e.g., determined) based on channel state information and/or a SNR requirement of the WTRU.

A WTRU may be associated with one or more NR-PDCCH candidates. A WTRU may perform blind decoding to determine an active NR-PDCCH candidates and/or an active CCE associated with a NR-PDCCH candidate(s). The one or more NR-PDCCH candidates may use different aggregation levels. A set of NR-PDCCH candidates assigned to a WTRU may be associated with a search space. A choice of a NR-PDCCH candidate among the NR-PDCCH candidates of a search space may be done by an eNodeB/gNodeB. The choice of the NR-PDCCH candidate may be based on an aggregation level. The choice of the NR-PDCCH candidate may be done in a way such that the choice of the NR-PDCCH candidate avoids coincidence with an NR-PDCCH of a different WTRU. The choice of the candidate may be done in a way such that the choice of the candidate reduces an overlap with a NR-PDCCH candidate chosen for a different WTRU. A chosen NR-PDCCH for a WTRU and a chosen NR-PDCCH for a different WTRU may not coincide. A chosen NR-PDCCH for a WTRU and a chosen NR-PDCCH for a different WTRU may overlap (e.g., through an overlap of corresponding NR-CCEs on one or more NR-REGs and/or PRBs). The WTRU may detect the WTRU's current (e.g., currently active) NR-PDCCH by monitoring some or all of the WTRU's NR-PDCCH candidates and/or by checking cyclic redundancy check (CRC). Search spaces for different WTRUs may have overlap (e.g., two search spaces may have common candidates).

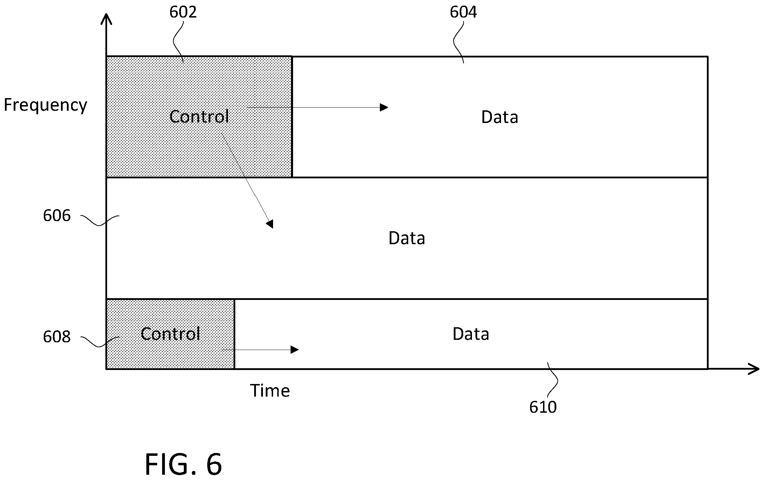

Non-orthogonal CCEs may be used for NR-PDCCH, e.g., based on a mixture of TDM and FDM design. A mixture of TDM and FDM may be used between control and data. For example, a part of a frequency band may be used for a data transmission(s) (e.g., only for data transmissions). One or more frequency subbands may be used for transmission of data and/or control, which may be multiplexed using TDM. In the subbands that include a control channel, NR-REG may map to the REs as described herein. NR-CCE may map to the NR-REGs as described herein. The control channel may correspond to data on the same frequency subband or data in another subband. FIG. 6 may be an example of a mixture of FDM and TDM for multiplexing of control channel and data. As shown in FIG. 6, the control information 602 on a frequency subband may be associated with data 604 on the same frequency subband or data 606 on another frequency subband. Control information 608 may be associated with data 610 on the same frequency subband.

For the set of signatures, a limit on the number of pairwise overlap among them may be included. As described herein, NR-CCEs may overlap, and the extent in which the NR-CCEs overlap may be limited. For example, the limit on a pairwise overlap may be smaller than a weight of signatures. A smaller limit may help increase detection capabilities. For example, the weight of a signature may include a number of 1s in a signature and/or a number of NR-REGs assigned to a NR-CCE. If the pairwise overlap is limited to be smaller than a limit which is smaller than the weight of a signature(s), the number of overlapping 1s may be smaller than the limit which is smaller than the number of 1s in a signature, and/or the number of overlapping NR-REGs may be smaller than the limit which is smaller than the number of NR-REGs assigned to a NR-CCE.

For example, signatures of a weight w may have a pairwise overlap that is not greater than one (1). A set of signatures of weight w whose pairwise overlap is not greater than 1 may be obtained from sets of optical orthogonal codes (OOCs). Some or all of the cyclic shifts of OOCs may be added to the set of signatures. An OOC may include a family of sequence of 0 and 1 with autocorrelation and cross-correlation properties. For example, the autocorrelation and/or cross-correlation properties may be provided as the following.

Autocorrelation property:

$$\sum_{i=0}^{n-1} x_i \cdot x_{i+k} \leq \lambda_a \qquad \text{Eq. 1}$$

Cross-correlation property:

$$\sum_{i=0}^{n-1} x_i \cdot y_{i+k} \leq \lambda_c \qquad \text{Eq. 2}$$

If it is assumed that $\lambda_a = \lambda_c = 1$ and that some or all of the cyclic shifts of the OOC are added to the signature set, the pairwise overlap of one or more (e.g., a pair of) signatures in the signature set may not be greater than 1. Some or all of OOCs may be designed using a combinatorial block design(s) (e.g., a Steiner system). A combinatorial block design(s) (e.g., a Steiner system) may be used to design the signatures.

A signature for a WTRU may be generated in a pseudo-random manner to lower complexity. For example, the pseudo-random sequence may include a length-31 gold sequence. The gold sequence may be initialized at the beginning of a radio frame/subframe/slot/mini-slot with a value. The value may depend on one or more of a cell identity, a WTRU identity, a radio frame/subframe/slot/mini-slot number, or beam identity.

In an example of NR-CCEs design, an NR-CCE may be designed using 4 out of 16 NR-REGs. 16 NR-REGs may be available. An NR-CCE may be designed using 4 NR-REGs.. An NR-CCE may be designed using 4 out of 16 NR-REGs. An orthogonal mapping of NR-CCEs to NR-REGs may provide 4 disjointed NR-CCEs. A non-orthogonal NR-CCEs may provide 16 NR-CCEs. A pair of the 16 NR-CCEs may overlap in at most one NR-REG. Table 1 may be an example of mapping for the 16 NR-CCEs of size 4 to 16 NR-REGs with indices of 0, ..., 15. The mapping herein may be based on a combinatorial block design (e.g., the Steiner system of S (2,4,16) and/or the finite affine plane of order 4).

Table 1 An example of mapping for 16 NR-CCEs of size 4 to 16 NR-REGs

| NR-CCE0={0,1,2,3}, NR-CCE1={4,5,6,7}, NR-CCE2={8,9,10,11}, NR-CCE3={12,13,14,15}, |
|---|
| NR-CCE4={0,4,8,12}, NR-CCE5={1,5,9,13}, NR-CCE6={2,6,10,14}, NR-CCE7={3,7,11,15}, NR-CCE8={0,5,10,15}, NR-CCE9={1,6,11,12}, NR-CCE10={2,7,8, 13}, NR-CCE11={3,4,9,14}, NR-CCE12={0,7,10,13}, NR-CCE13={1,4,11,14}, NR-CCE14={2,5,8,15}, NR-CCE15={3,6,9,12} |

An NR-CCE may be designed using 3 out of 9 NR-REGs. An NR-CCE may be designed using 3 NR-REGs (e.g., out of 9 NR-REG). A design (e.g., a signature design) for NR-CCEs may be obtained using the Steiner triple systems S (2,3,n). 9 NR-REGs may be available. When 9 NR-REGs are available, 12 NR-CCEs of size 3 may be used. A pair of the 12 NR-CCEs may overlap in at most one NR-REG. Table 2 may be an example of mapping for the 12 NR-CCEs of size 3 to 9 NR-REGs with indices of 0, ..., 8.

Table 2 An example of mapping for 12 NR-CCEs of size 3 to 9 NR-REGs

NR-CCE0={0,1,2}, NR-CCE1={3,4,5}, NR-CCE2={6,7,8},
NR-CCE3={0,3,6}, NR-CCE4={1,4,7}, NR-CCE5={2,5,8},
NR-CCE6={0,4,8}, NR-CCE7={1,5,6}, NR-CCE8={2,3,7},
NR-CCE9={0,5,7}, NR-CCE10={1,3,8}, NR-CCE11={2,4,6},

Table 3 may show a comparison of a user blocking probability for 3 WTRUs using the non-orthogonal NR-CCE approach discussed herein and a user blocking probability for 3 WTRUs using the orthogonal NR-CCEs It may be assumed that 8x16 NR-REGs may be in the control region (e.g., similar to 8 PRB pairs in the control region using FDM). It may be assumed that an aggregation level of 4 is used for some or all candidates and/or that two NR-PDCCHs are in a search space.

Table 3 Comparison between a user blocking probability of the non-orthogonal control channel and a user blocking probability of the orthogonal control channel

|  | User blocking probability using non-orthogonal NR-CCEs (approaches discussed herein) | User blocking probability using orthogonal NR-CCEs |
| --- | --- | --- |
| Non-overlapping search space | 0.0039 | 0.0625 |
| Overlapping search space | 0.00098 | 0.0156 |

Reference signals for NR-PDCCH may be designed for non-orthogonal NR-CCEs. For non-orthogonal CCEs, reference signals (RSs) may be designed/implemented on the REGs/PRBs that are shared among different CCEs.

RSs may be designed based on a common RS(s) or a wide-beam RS(s). User-based MIMO precoding may not be used for the RSs. A reference signal may be used for the WTRUs (e.g., all WTRUs). The WTRUs may share a REG(s) or a PRB(s) in the control channel.

RSs may be designed based on an orthogonal RS. On a REG that is shared among multiple CCEs, orthogonal RSs (e.g., pilots) may be assigned to one or more CCEs. For example, a REG may include 12 REs. The 12 REs may correspond to OFDM symbols on 12 tones of a PRB. In the example, 2 REs inside the REG may be reserved for demodulation reference signals (DMRS). Two orthogonal DMRS may be considered and/or assigned to two CCEs that share the REG/PRB. Two orthogonal DMRS may be considered and/or assigned to two group of CCEs corresponding to precoding schemes.

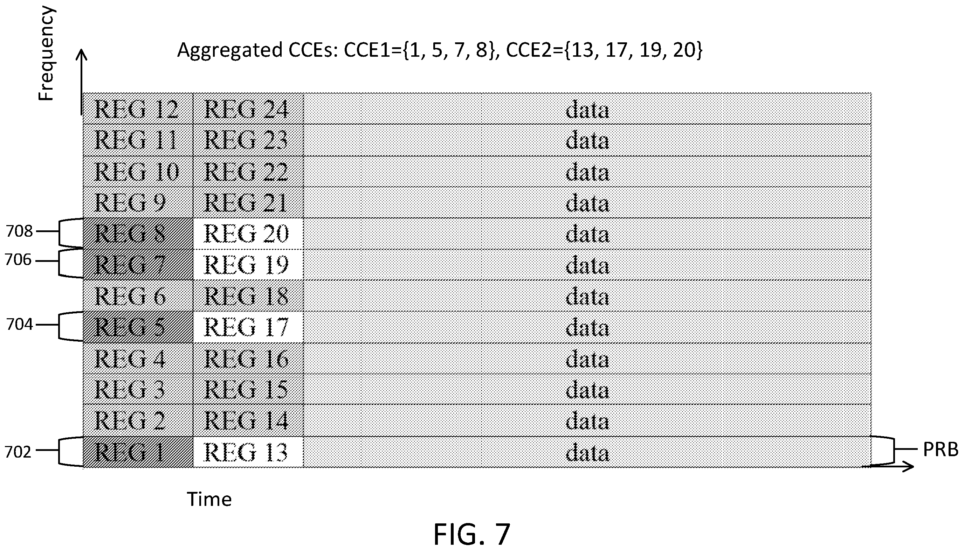

Channel estimation results from reference signals associated with a NR-PDCCH may be combined, e.g., to improve the quality of channel estimation. CCEs in the NR-PDCCH may be aggregated such that they lie close to each other in frequency or time. The channel on the corresponding REGs of the aggregated CCEs may become close to each other. FIG. 7 illustrates an example of an aggregation of CCEs where corresponding REGs of the aggregated of CCEs become close to each other. Aggregated CCEs may include CCE1 and CCE2. CCE 1 may include REG 1, REG 5, REG 7, and REG 8. CCE 2 may include REG 13, REG 17, REG 19, and REG 20. REG 1 and REG 13 may be in a frequency subband 702 and/or lie closely to each other in time. REG 5 and REG 17 may be in a frequency subband 704 and/or lie closely to each other in time. REG 7 and REG 19 may be in a frequency subband 706 and/or lie closely to each other in time. REG 8 and REG 20 may be in a frequency subband 708 and/or lie closely to each other in time.

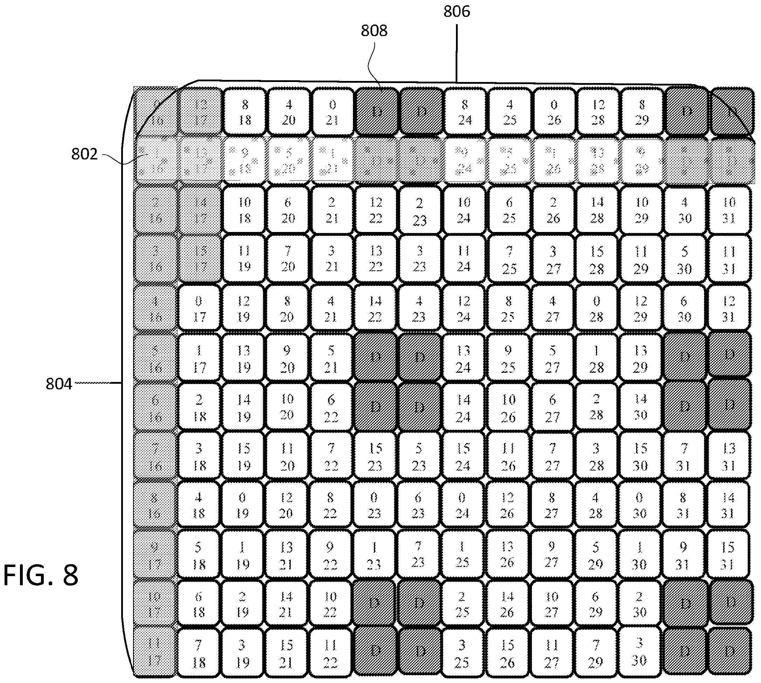

Signature-based non-orthogonal REGs may be used for NR-PDCCH. Overlapping REGs (e.g., NR-REGs) may be based on sparse signatures. A NR-REG may be included in a NR-CCE for a WTRU. Multiple NR-REGs may be assigned to a WTRU (e.g., for better coverage). FIG. 8 may illustrate an example of resource allocation for NR-REGs. In the example, thirty-two (32) REGs may be used. A RE may be mapped to a pair of REGs. Control channels of different WTRUs may be fully non-orthogonal (e.g., as shown in FIG. 8). Control channel REs may be partially orthogonal and/or partially non-orthogonal. As shown in FIG. 8, RE 802 is mapped to REG 804 and REG 806. RE 808 is for DMRS.

Signature-based non-orthogonal REGs may include a set of signatures that include a limit on the number of pairwise overlap among them. Non-orthogonal CCEs (e.g., based on orthogonal REGs) may include a set of signatures that include a limit on the number of pairwise overlap among them. A set of signatures may be obtained from sets of optical orthogonal codes (OOCs). Some or all of the cyclic shifts of OOCs may be added to the set. A combinatorial block design(s) may be used in the design of the signatures that map REGs to a RE(s). Symbols sent on a NR-REG may be obtained by applying a forward error-correcting code (FEC) and/or some other approaches that induce dependency among the symbols.

Symbol mapping and/or detection may be used for a signature-based non-orthogonal control channel. Allocation of REs to NR-REGs and/or NR-CCEs may have overlap. Appropriate transmission schemes may be used such that a collision of control data for different WTRUs may not result in loss of control signals. The collision of control data for different WTRUs may occur through an overlap in RE usage. Different approaches may be used, similar to the signature-based non-orthogonal schemes for data transmission in 5G NR. One or more of the following approaches may be used, for example, to mitigate the loss of the control signals.

Transmitted symbols may be repeated (e.g., similar to a low-density spreading (LDS) approach). Signature-based non-orthogonal CCEs may use repeated transmitted symbols. Different NR-REGs corresponding to a NR-CCE may be repetitions of each other. Non-orthogonal NR-REGs may or may not use repeated transmitted symbols.

Inter-symbol dependencies may be induced. Mapping from control data to a set of symbols that are sent over the corresponding REs (e.g., similar to a constellation design for subcarrier multiple access (SCMA)) may be used. Mapping may be used in non-orthogonal NR-REGs and/or non-orthogonal NR-CCEs. For non-orthogonal NR-REGs, control data may be (e.g., directly) mapped to a set of symbols that are sent over the REs of the corresponding NR-REG. For non-orthogonal NR-CCEs, control data may be (e.g., directly) mapped to a set of symbols that are sent over the corresponding REs of different NR-REGs that are mapped to a same NR-CCE.

Channel coding (e.g., channel coding together with interleavers) may be used to induce dependency among symbols that are sent over a same NR-REG and/or NR-CCE. A low coding rate for FEC may be used to improve performance. The low coding rate may be achieved using different interleavers for control channels of different users. At the receiver, a message-passing algorithm (MPA) may be used for detection to achieve near-maximum-likelihood with moderate complexity (e.g., similar to LDS and/or SCMA and/or sparse non-orthogonal approaches).

Signature-based non-orthogonal control design may be used for uplink. Non-orthogonal signatures may be used to allocate REs of the control channel to different WTRUs in UL (e.g., similar to the control channel design for downlink). Non-orthogonal signatures may be used if cyclic prefix (CP)-OFDM is used for uplink in NR. Signatures may include what is discussed for downlink (e.g., discussed herein). Signatures may be based on a limited pairwise overlap. Symbol mapping and/or detection techniques discussed herein may be applicable.

Time-division multiplexing (TDM) and space-division multiplexing (SDM) techniques may be used for sharing one or more PRBs among different CCEs. A PRB may be shared among multiple CCEs (e.g., other than or in addition to superposition on shared REGs) by using TDM and/or SDM. Techniques for sharing PRBs among several CCEs may be used to lower a blocking probability of the control channel. The techniques for sharing PRBs among several CCEs may increase the number of available CCEs and/or increase the number of control channel candidates.

For SDM, a REG/PRB may be shared among multiple CCEs (e.g., the multiple CCEs may be assigned to different WTRUs) by using different beams that are formed by multiple antennas at a transmitter.

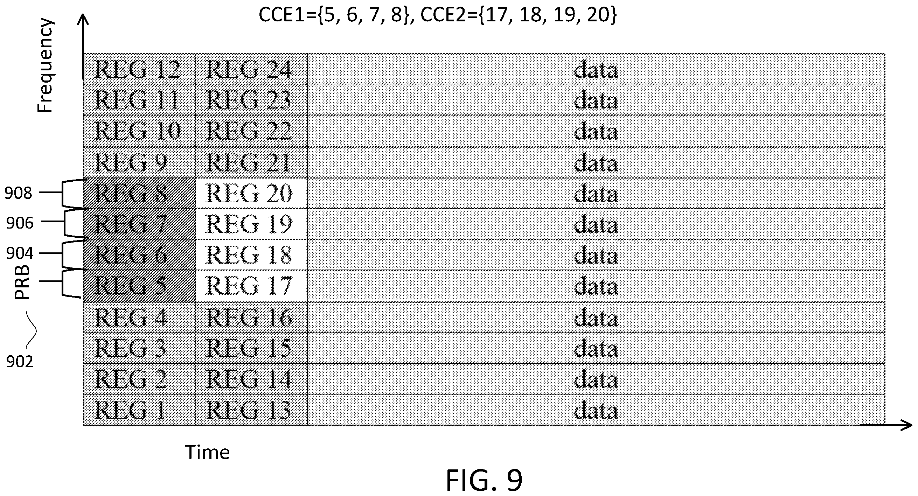

As discussed herein, several REGs may be included on a PRB using TDM. For example, the first OFDM symbol(s) may be assigned on the frequency tones of the PRB to a REG, and/or the second OFDM symbol(s) may be assigned to another REG. FIG. 4 illustrates an example of mapping NR-REGs to REs based on a time division multiplexing (TDM) design for multiplexing of control channel and data. When TDM is used, different (e.g., two) REGs included on a PRB (e.g., on different OFDM symbols) may be assigned to different CCEs. FIG. 9 illustrates an example of sharing a PRB among CCEs using TDM. CCE 1 may include REG 5, REG 6, REG 7, and REG 8. CCE 2 may include REG 17, REG 18, REG 19, and REG 20. CCE 1 and CCE 2 may share PRB(s) 902, 904, 906, and 908.

Non-orthogonal nominal NR-PDCCH candidates based on orthogonal CCEs may be used. NR-CCEs may be orthogonal and/or may not overlap with each other. The nominal NR-PDCCH candidates may share one or more CCEs. At the transmitter, eNodeB/gNodeB may modify the nominal NR-PDCCH candidates and/or form actual NR-PDCCH for the WTRUs by (e.g., puncturing overlapped CCEs). For example, the WTRUs and/or the transmitter may not send anything on the overlapped CCEs. Non-orthogonal nominal NR-PDCCH candidates based on orthogonal CCEs may include and/or be associated with flexible assigning aggregation level (AL).

A WTRU (e.g., each WTRU) may be associated with a set of potential NR-PDCCH candidates (e.g., a WTRU's search space). The set of potential NR-PDCCH candidates (e.g., a WTRU's search space) may be determined by radio network temporary identifier (RNTI) or other mechanisms related to the access of the WTRU to the networks. Among sets of candidates for different active WTRUs, the eNodeB/gNodeB may choose a nominal NR-PDCCH candidate for a (e.g., each) WTRU. Choices of sets of candidates for different active WTRUs may not coincide with each other. Choices of sets of candidates for different active WTRUs may partially overlap in one or more CCEs. The eNodeB/gNodeB may puncture the CCEs that are shared among the chosen nominal candidates for different WTRUs. The eNodeB/gNodeB may use the remaining CCEs as actual NR-PDCCH for those WTRUs. The WTRUs may not know which CCE is shared or punctured. The WTRUs may know how the search spaces are assigned based on RNTI.

Techniques for transmissions on the multiple CCEs of a control channel (e.g., NR-PDCCH) may be repetition. The multiple CCEs may be on a same control channel. Techniques for transmission on the multiple CCEs of the control channel (e.g., NR-PDCCH) may be based on using erasure coding.

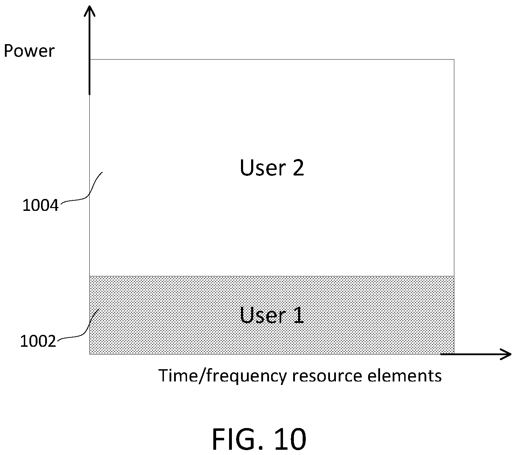

Power-domain non-orthogonal control channel multiplexing may be used to support a number of WTRUs in a downlink control channel. FIG. 10 may illustrate an example of power-domain non-orthogonal control channel multiplexing (e.g., power-domain non-orthogonal multiple access (NOMA)). A NR-REG and/or a NR-CCE may be assigned (e.g., similar to EREG and/or ECCE in EDPCCH). A NR-CCE may not be assigned to a WTRU. The control channel of one or more WTRUs (e.g., two WTRUs) may be linearly superimposed on a NR-CCE (e.g., a same NR-CCE). For example, the control channel of one or more WTRUs (e.g., two WTRUs) may be linearly superimposed on a same NR-CCE by using different power levels. As shown in FIG. 10, the control channel 1004 for User 2 may be linearly superimposed on the control channel 1002 for User 1. User pairing may be done based on exploiting SINR difference through a near-far effect. For example, users with a good channel quality (e.g., high SINR) may be paired with users with relatively low SINR.

At the receiver, detection of control signals may be done by successive interference cancellation (SIC). For a user with a relatively lower SINR (e.g., a far user), detection may be done by considering some or all of the interference as noise. A power-domain NOMA may be used for an uplink control channel (e.g., similar to the uplink NOMA).

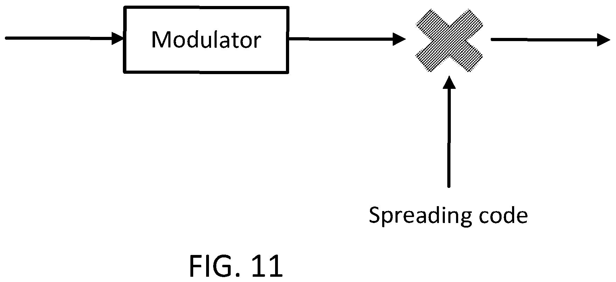

Time-domain spreading may be used for a control channel. An asynchronous detection of control signals may be used in some applications (e.g., uplink with asynchronous WTRUs). Multiplexing through time-domain spreading may be used for an asynchronous detection of control signals. Multiplexing through time-domain spreading may not include synchronization. Time-domain spreading for a control channel may be based on a single carrier transmission. A signal of different WTRUs may be spread using sequences with autocorrelation and/or cross-correlation properties (e.g., good autocorrelation and/or cross-correlation properties). FIG. 11 may be an example of time-domain spreading for control channel (e.g., using DS-CDMA), through multiplication of a sequence (e.g., direct-sequence CDMA). The sequences may be from a set of pseudo-random sequences and/or gold sequences.

A wireless transmit/receive unit (WTRU) may be configured to determine a use case scenario such as a ultra-reliable low latency (URLLC) or massive machine type communication (mMTC) scenario. The WTRU may be signaled or configured to determine multiple physical downlink control channel (PDCCH) candidates for the WTRU. The WTRU may use a hashing function to determine the PDCCH candidates for the WTRU. The PDCCH candidates may be mapped to multiple control channel elements (CCEs). The CCEs may be mapped to resource element groups (REGs). Some CCEs of the plurality of CCEs may overlap at a resource element (RE) or a REG. For example, the overlapping CCEs may include a RE being assigned to a position that is common to the CCEs. The position that is common to the CCEs may be a slot.

The WTRU may blind-detect an active PDCCH for the WTRU using interference cancellation. For example, the WTRU may know the mapping of the PDCCH candidates to the CCEs and the mapping of the CCEs to REGs. The WTRU may use the determined mappings to mitigate interference from an active overlapping CCE of a PDCCH for another WTRU. A RE of the active overlapping CCE of the PDCCH for the other WTRU may have a position that is common to a RE of the active CCE of the PDCCH for the WTRU. The WTRU may decode the active CCE of the PDCCH for the WTRU for control information. The WTRU may decode REs in slots assigned to carry the control information within the active CCE. The WTRU may then transmit based on the control information.

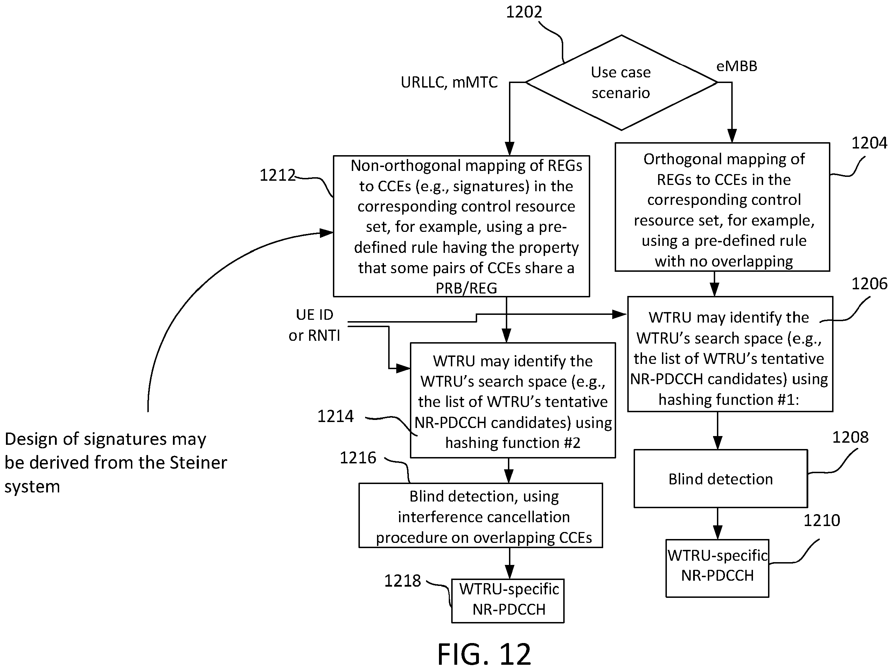

A non-orthogonal PDCCH may be chosen, and/or a WTRU implementation related to the non-orthogonal PDCCH may be used. A non-orthogonal PDCCH may be considered for use case scenarios such as URLLC and/or mMTC. The WTRU may determine between looking for an orthogonal PDCCH and a non-orthogonal PDCCH (e.g., based on techniques and/or approaches discussed herein) based on the use case scenarios. FIG. 12 illustrates an example schematic overview of a WTRU implementation using a non-orthogonal PDCCH. At 1202, a use case scenario may be determined. The use case scenario may be a first use case scenario or a second case use scenario. For example, the first use case scenario may be, for example, an eMBB. The second case use scenario may be URLLC, or mMTC. If the use case scenario is the first use case scenario (e.g., eMBB), a WTRU may look for orthogonal mapping of REGs to CCEs in a corresponding control resource set at 1204. The WTRU may use a pre-defined rule associated with a case where there is no overlapping. The WTRU may receive a WTRU ID or RNTI. The WTRU may identify a search space (e.g., the WTRU's search space) at 1206. The WTRU may use a hashing function to identify the search space. For example, the WTRU may use the first hashing function (hashing function #1) to determine a list of NR-PDCCH candidates associated with the WTRU. The determined list of NR-PDCCH candidates associated with the WTRU may be tentative. The WTRU may perform a blind detection (e.g., a legacy blind detection) at 1208. The WTRU may determine an NR-PDCCH for the WTRU (e.g., a WTRU-specific NR-PDCCH) at 1210.

If the use case scenario is determined to be the second use case scenario (e.g., URLLC and/or mMTC) at 1202, the WTRU may look for a non-orthogonal mapping of REGs to CCEs (e.g., signatures) in a corresponding control resource set at 1212. The WTRU may use a pre-defined rule having a property that some (e.g., some pairs of) CCEs overlap. The overlapping CCEs may share a PRB or a REG. The design of the signatures may be derived from the Steiner system. The WTRU may receive a WTRU ID or RNTI. The WTRU may identify a search space (e.g., the WTRU's search space) at 1214. The WTRU may use a hashing function to identify the search space. For example, the WTRU may use the second hashing function (hashing function #2) to determine a list of NR-PDCCH candidates associated with the WTRU. The second hashing function may be different from the first hashing function. The determined list of NR-PDCCH candidates associated with the WTRU may be tentative. The WTRU may perform a blind detection at 1216. The WTRU may use an interference cancellation implementation(s) on overlapping CCEs to perform the blind detection. The WTRU may determine an NR-PDCCH for the WTRU (e.g., a WTRU-specific NR-PDCCH) at 1218.

Choosing a non-orthogonal PDCCH(s) (e.g., based on the use case scenarios) may affect a function that determines a search space corresponding to the WTRU. The function that determines the search space corresponding to the WTRU may include a hashing function (e.g., the second hashing function). The search space may include tentative PDCCH candidates of the WTRU. If the non-orthogonal PDCCH(s) is used, the PDCCH detection and/or decoding mechanism (e.g., the blind detection at 1216) may be affected. If the non-orthogonal PDCCH(s) is used, the WTRU may select an interference cancellation and/or decoding implementation based on the non-orthogonal design of a system (e.g., based on a non-orthogonal mapping of REGs to CCEs). For example, the interference cancellation and/or decoding implementation may include performing a message passing algorithm on a graph corresponding to the non-orthogonal mapping of REGs to CCEs.

The processes and instrumentalities described herein may apply in any combination, may apply to other wireless technologies, and for other services.

A WTRU may refer to an identity of the physical device, or to the user's identity such as subscription related identities, e.g., MSISDN, SIP URI, etc. WTRU may refer to application-based identities, e.g., user names that may be used per application.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as CD-ROM disks, and/or digital versatile disks (DVDs). A processor in association with software may be used to implement a radio frequency transceiver for use in a WTRU, terminal, base station, RNC, and/or any host computer.

**Claims**

1. A wireless transmit/receive unit, WTRU, for wireless communication using non-orthogonal control channel elements, CCEs,

   a memory; and
   a processor configured to:

      determine a plurality of physical downlink control channel, PDCCH, candidates;
      determine a mapping between the plurality of PDCCH candidates and a plurality of control channel elements, CCEs, of said CCEs, and a mapping between the plurality of CCEs and a plurality of resource element groups, REGs, wherein there is an overlap of at least two CCEs of the plurality of CCEs, and wherein the overlap of the at least two CCEs comprises a resource element, RE, being assigned to a position that is common to the at least two CCEs; blind-detect a PDCCH transmission associated with the WTRU, wherein the blind detection uses interference cancellation, and wherein the interference cancellation uses the determined mappings to mitigate interference from an active overlapping CCE associated with a PDCCH transmission associated with a different WTRU;
      decode an active CCE associated with the PDCCH transmission associated with the WTRU for control information of the WTRU; and
      transmit a signal based on the control information.

2. The WTRU of claim 1, wherein the at least two CCEs comprises a RE being assigned to a position that is not common to the at least two CCEs.

3. The WTRU of claim 1, wherein the position that is common to the at least two CCEs is a same slot.

4. The WTRU of claim 1, wherein the use of the determined mappings to mitigate interference comprises the processor being further configured to use the mappings to determine that a RE of the active overlapping CCE of the PDCCH transmission associated with the different WTRU has a position that is common to a RE of the active CCE associated with the PDCCH transmission associated with the WTRU.

5. The WTRU of claim 1, wherein decoding the active CCE associated with the PDCCH transmission associated with the WTRU for control information comprises decoding REs in slots assigned to carry the control information within the active CCE associated with the PDCCH transmission associated with the WTRU.

6. The WTRU of claim 1, wherein the processor is further configured to determine a use case scenario.

7. The WTRU of claim 6, wherein the use case scenario is a ultra-reliable low latency communication, URLLC, scenario or a massive machine type communication, mMTC, scenario.

8. The WTRU of claim 1, wherein a hashing function is used to determine the PDCCH transmission associated with the WTRU.

9. A method for wireless communication based on non-orthogonal control channel elements, CCEs, comprising determining a plurality of physical downlink control channel, PDCCH, candidates;
determining a mapping between the plurality of PDCCH candidates and a plurality of CCEs of said CCEs and a mapping between the plurality of CCEs and a plurality of resource element groups, REGs, wherein there is an overlap of at least two CCEs of the plurality of CCEs, and wherein the overlap of the at least two CCEs comprises a resource element, RE, being assigned to a position that is common to the at least two CCEs; blind-detecting a PDCCH transmission associated with a wireless transmit/receive unit, WTRU, wherein the blind detection uses interference cancellation, and wherein the interference cancellation uses the determined mappings to mitigate interference from an active overlapping CCE associated with a PDCCH transmission associated with a different WTRU;
decoding an active CCE associated with the PDCCH transmission associated with the WTRU for control information for the WTRU; and
transmitting a signal based on the control information.

10. The method of claim 9, wherein the at least two CCEs comprises a RE being assigned to a position that is not common to the at least two CCEs.

11. The method of claim 9, wherein the position that is common to the at least two CCEs is a same slot.

12. The method of claim 9, wherein the use of the determined mappings to mitigate interference comprises using the mappings to determine that a RE of the active overlapping CCE of the PDCCH transmission associated with the different WTRU has a position that is common to a RE of the active CCE associated with the PDCCH transmission associated with the WTRU.

13. The method of claim 9, wherein decoding the active CCE associated with the PDCCH transmission associated with the WTRU for control information comprises decoding REs in slots assigned to carry the control information within the active CCE associated with the PDCCH transmission associated with the WTRU.

14. The method of claim 9, further comprising determining a use case scenario, wherein the use case scenario is a ultra-reliable low latency communication, URLLC, scenario or a massive machine type communication, mMTC, scenario.

15. The method of claim 9, further comprising determining the PDCCH transmission associated with the WTRU using a hashing function.

**Patentansprüche**

1. Drahtlose Übertragungs-/Empfängereinheit, WTRU, zur drahtlosen Kommunikation, die nicht-orthogonale Steuerkanal-Elemente, CCE, verwendet, umfassend:

   einen Speicher; und
   einen Prozessor, der ausgestaltet ist zum:

Bestimmen von mehreren physischen Download-Steuerkanal-Kandidaten, PDCCH-Kandidaten;
Bestimmen einer Zuordnung zwischen den mehreren PDCCH-Kandidaten und mehreren Steuerkanal-Elementen, CCEs, der CCEs, und einer Zuordnung zwischen den mehreren CCEs und mehreren Ressourcenelement-Gruppen, REGs,

wobei eine Überlappung von wenigstens zwei CCEs der mehreren CCEs vorhanden ist und wobei die Überlappung der wenigstens zwei CCEs ein Ressourcenelement, RE, umfasst, das einer Position zugeordnet ist, die den wenigstens zwei CCEs gemeinsam ist;
Blind-Detektieren einer PDCCH-Übertragung, die der WTRU zugeordnet ist, wobei das Blind-Detektieren eine Schnittstellen-Streichung verwendet und wobei die Schnittstellen-Streichung die bestimmten Zuordnungen zum Abschwächen der Interferenz von einer aktiven Überlappung CCE verwendet, die einer PDCCH-Übertragung zugeordnet ist, die einer unterschiedlichen WTRU zugeordnet ist,
Dekodieren eines aktiven CCEs, das der PDCCH-Übertragung zugeordnet ist, die der WTRU für Steuerinformationen der WTRU zugeordnet ist; und
Übertragen eines auf der Steuerinformation basierenden Signals.

2. WTRU nach Anspruch 1, wobei die wenigstens zwei CCEs ein RE umfassen, das einer Position zugeordnet ist, die den wenigstens zwei CCEs nicht gemeinsam ist.

3. WTRU nach Anspruch 1, wobei die Position, die den wenigstens zwei CCEs gemeinsam ist, ein und derselbe Schlitz ist.

4. WTRU nach Anspruch 1, wobei die Verwendung der bestimmten Zuordnungen zum Abschwächen der Interferenz beinhaltet, dass der Prozessor weiterhin zum Verwenden der Zuordnungen zum Bestimmen ausgestaltet ist, dass ein RE der aktiven Überlappung CCE der PDCCH-Übertragung, die der unterschiedlichen WTRU zugeordnet ist, eine Position aufweist, die einem RE des aktiven CCEs gemeinsam ist, das der PDCCH-Übertragung zugeordnet ist, die der WTRU zugeordnet ist.

5. WTRU nach Anspruch 1, wobei das Dekodieren des aktiven CCEs, das der PDCCH-Übertragung zugeordnet ist, der WTRU zu Steuerinformationen zugeordnet ist, das Dekodieren von REs in Schlitzen umfasst, die zum Transportieren der Steuerinformationen innerhalb des aktiven CCEs zugeordnet sind, das der PDCCH-Übertragung zugeordnet ist, die der WTRU zugeordnet ist.

6. WTRU nach Anspruch 1, wobei der Prozessor weiterhin zum Bestimmen eines Verwendungsfall-Szenarios ausgestaltet ist.

7. WTRU nach Anspruch 6, wobei das Verwendungsfall-Szenario ein ultra-zuverlässiges Kommunikations-Szenario mit niedriger Latenz, URLLC-Szenario, oder ein massives Szenario vom Maschinentyp, mMTC-Szenario, ist.

8. WTRU nach Anspruch 1, wobei eine Zerhackerfunktion zum Bestimmen der PDCCH-Übertragung verwendet ist, die der WTRU zugeordnet ist.

9. Verfahren für eine drahtlose Kommunikation basierend auf nicht-orthogonalen Steuerkanal-Elementen, CCEs, umfassend
Bestimmen von mehreren physischen Downlink-Steuerkanalkandidaten, PDCCH;
Bestimmen einer Zuordnung zwischen den mehreren PDCCH-Kandidaten und mehreren CCEs; der CCEs und einer Zuordnung zwischen den mehreren CCEs und mehreren Ressourcenelement-Gruppen, REGs;
wobei eine Überlappung von wenigstens zwei CCE der mehreren CCEs vorhanden ist, und
wobei die Überlappung der wenigstens zwei CCEs ein Ressourcenelement, RE, umfasst, das einer Position zugeordnet ist, die den wenigstens zwei CCEs gemeinsam ist;
Blind-Detektieren einer PDCCH-Übertragung, die einer drahtlosen Übertragungs-/Empfangseinheit, WTRU, zugeordnet ist,
wobei die Blind-Detektion eine Interferenz-Streichung verwendet und wobei die Interferenz-Streichung die bestimmten Zuordnungen zum Abschwächen der Interferenz von einer aktiven Überlappung CCE verwendet, die einer PDCCH-Übertragung zugeordnet ist, die einer unterschiedlichen WTRU zugeordnet ist;
Dekodieren eines aktiven CCEs, das der PDCCH-Übertragung zugeordnet ist, die der WTRU für Steuerinformationen für die WTRU zugeordnet ist; und
Übertragen eines auf der Steuerinformation basierenden Signals.

**10.** Verfahren nach Anspruch 9, wobei die wenigstens zwei CCEs ein RE umfassen, das einer Position zugeordnet wird, die den wenigstens zwei CCEs nicht gemeinsam ist.

**11.** Verfahren nach Anspruch 9, wobei die Position, die den wenigstens zwei CCEs gemeinsam ist, derselbe Schlitz ist.

**12.** Verfahren nach Anspruch 9, wobei die Verwendung der bestimmten Zuordnungen zum Abschwächen der Interferenz das Verwenden der Zuordnungen zum Bestimmen umfasst, dass ein RE der aktiven Überlappung CCE der PDCCH-Übertragung, die der unterschiedlichen WTRU zugeordnet wird, eine Position aufweist, die einem RE des aktiven CCEs gemeinsam ist, die der PDCCH-Übertragung zugeordnet wird, die der WTRU zugeordnet wird.

**13.** Verfahren nach Anspruch 9, wobei das Dekodieren des aktiven CCEs, das der PDCCH-Übertragung zugeordnet wird, die der WTRU für Steuerinformationen zugeordnet wird, das Dekodieren von REs in Schlitzen umfasst, die zum Übertragen der Steuerinformationen innerhalb des aktiven CCEs bestimmt sind, die der PDCCH-Übertragung zugeordnet sind, die der WTRU zugeordnet wird.

**14.** Verfahren nach Anspruch 9, weiterhin umfassend das Bestimmen eines Verwendungsfall-Szenarios, wobei das Verwendungsfall-Szenario ein ultra-zuverlässiges Kommunikations-Szenario mit niedriger Latenz, URLLC-Szenario, oder ein massives Kommunikations-Szenario vom Maschinentyp, mMTC-Szenario, ist.

**15.** Verfahren nach Anspruch 9, weiterhin umfassend das Bestimmen der PDCCH-Übertragung, die der WTRU zugeordnet wird, die eine Zerhackerfunktion aufweist.

**Revendications**

**1.** Unité d'émission/réception sans fil, WTRU, pour une communication sans fil utilisant des éléments de canal de commande non orthogonaux, CCEs, comprenant :

une mémoire ; et
un processeur configuré pour :

déterminer une pluralité de canaux de commande de liaison descendante physique candidats (PDCCH) ;
déterminer une mise en correspondance entre la pluralité de candidats PDCCH et une pluralité d'éléments de canal de commande CCEs desdits CCEs et une mise en correspondance entre la pluralité de CCEs et une pluralité de groupes d'éléments de ressources (REGs),

dans laquelle il y a un chevauchement d'au moins deux CCEs de la pluralité de CCEs, et dans lequel le chevauchement des au moins deux CCEs comprend un élément de ressource RE, étant attribué à une position commune aux au moins deux CCE ;
effectuer une détection aveugle d'une transmission PDCCH associée à la WTRU, dans laquelle la détection aveugle utilise l'annulation d'interférence, et dans laquelle l'annulation d'interférence utilise les mises en correspondance déterminées pour atténuer les interférences d'un chevauchement de CCE actif associé à une transmission PDCCH associée à une autre WTRU ;
décoder un CCE actif associé à la transmission associée à la WTRU pour la commande des informations de la WTRU ; et
transmettre un signal basé sur les informations de commande.

**2.** WTRU selon la revendication 1, dans laquelle les au moins deux CCEs comprennent une RE affectée à une position qui n'est pas commune aux au moins deux CCE.

**3.** WTRU selon la revendication 1, dans laquelle la position qui est commune aux au moins deux CCEs est un même intervalle.

**4.** WTRU selon la revendication 1, dans laquelle l'utilisation des mises en correspondance déterminés pour atténuer les interférences comprend le processeur étant en outre configuré pour utiliser les mises en correspondance pour déterminer qu'un RE du chevauchement de CCE actif d'une transmission PDCCH associée aux différentes WTRU a une position qui est commune à un RE du CCE actif associé à la transmission PDCCH associée à la WTRU.

**5.** WTRU selon la revendication 1, dans laquelle le décodage du CCE actif associé à la transmission PDCCH avec la WTRU pour les informations de commande comprend le décodage de RES dans des intervalles affectés pour transporter les informations de commande à l'intérieur du CCE actif associé à la transmission PDCCH associée avec le WTRU.

**6.** WTRU selon la revendication 1, dans laquelle le processeur est en outre configuré pour déterminer un scénario de cas d'utilisation.

**7.** WTRU selon la revendication 6, dans laquelle le scénario de cas d'utilisation est un scénario de communication ultra-fiable à faible latence, URILLC, ou un scénario de communication de type machine massive (mMTC).

**8.** WTRU selon la revendication 1, dans laquelle une fonction de hachage est utilisée pour déterminer la transmission PDCCH associée à la WTRU.

**9.** Procédé pour la communication sans fil basé sur des éléments de canal de commande non orthogonaux (CCEs) comprenant de
déterminer une pluralité de canaux de commande de liaison descendante physique (PDCCH),
déterminer une mise en correspondance entre la pluralité de candidats PDCCH et une pluralité de CCEs desdits CCEs et une mise en correspondance entre la pluralité de CCEs et une pluralité de groupes d'éléments de ressources REGs,
dans lequel il y a un chevauchement d'au moins deux CCEs de la pluralité de CCEs, et dans lequel le chevauchement d'au moins deux CCEs comprend un élément de ressource (RE) étant affecté à une position commune aux au moins deux CCE ;
effectuer une détection aveugle d'une transmission PDCCH associée à une unité d'émission/réception sans fil (WTRU), dans lequel la détection aveugle utilise l'annulation d'interférence, et dans lequel l'annulation d'interférence utilise les mises en correspondance déterminés pour atténuer les interférences d'un CCE de chevauchement actif associé à une transmission PDCCH associée à une WTRU différente ;
décoder un CCE actif associé à la transmission PDCCH associée à la WTRU pour les informations de commande pour la WTRU ; et
émettre un signal sur la base des informations de commande.

**10.** Procédé selon la revendication 9, dans lequel les au moins deux CCEs comprennent un RE affecté à une position qui n'est pas commune aux au moins deux CCE.

**11.** Procédé selon la revendication 9, dans lequel la position qui est commune aux au moins deux CCE est un même intervalle.

**12.** Procédé selon la revendication 9, dans lequel l'utilisation des mises en correspondance déterminées pour atténuer les interférences comprend l'utilisation des mises en correspondance pour déterminer qu'un RE du chevauchement de CCE actif de la transmission PDCCH associée aux différentes WTRU a une position commune à un RE du CCE actif associé à la transmission PDCCI associée à la WTRU.

**13.** Procédé selon la revendication 9, dans lequel le décodage du CCE actif associé à la transmission PDCCH associé avec la WTRU pour les informations de commande comprend le décodage de REs dans des intervalles affectés pour transporter les informations de contrôle à l'intérieur du CCE actif associé à la transmission PDCCH associée à la WTRU.

**14.** Procédé selon la revendication 9, comprenant en outre la détermination d'un scénario de cas d'utilisation, dans lequel le scénario de cas d'utilisation est un scénario de communication ultra-fiable à faible latence (URLLC) ou un scénario de communication de type machine massif, mMTC.

**15.** Procédé selon la revendication 9, comprenant en outre la détermination de la transmission PDCCI associée à la WTRU en utilisant une fonction de hachage.

**FIG. 1A**

EP 3 520 294 B1

116

122

102

| | | |
|---|---|---|
| **124** Speaker/ Microphone | **120** Transceiver | **134** Power Source |
| **126** Keypad | **118** Processor | **136** GPS Chipset |
| **128** Display/ Touchpad | | **138** Peripherals |
| **130** Non-Removable Memory | | **132** Removable Memory |

# FIG. 1B

FIG. 1C

108 PSTN

110 Internet

112 Other Networks

106 Core Network

162 MME

164 Serving Gateway

166 PDN Gateway

104 RAN

160a eNode-B

160b eNode-B

160c eNode-B

S1

S1

S1

X2

X2

116

116

116

102a

102b

102c

**FIG. 1D**

FIG. 2

NR-CCE1 = {0, 4, 8, 12}

NR-CCE2 = {0, 5, 7, 11}

NR-CCE3 = {2, 6, 11, 15}

FIG. 3

FIG. 4

FIG. 5

FIG. 6

Aggregated CCEs: CCE1={1, 5, 7, 8}, CCE2={13, 17, 19, 20}

| | | |
|---|---|---|
| REG 12 | REG 24 | data |
| REG 11 | REG 23 | data |
| REG 10 | REG 22 | data |
| REG 9 | REG 21 | data |
| REG 8 | REG 20 | data |
| REG 7 | REG 19 | data |
| REG 6 | REG 18 | data |
| REG 5 | REG 17 | data |
| REG 4 | REG 16 | data |
| REG 3 | REG 15 | data |
| REG 2 | REG 14 | data |
| REG 1 | REG 13 | data |

708
706
704
702

Frequency

Time

PRB

FIG. 7

FIG. 8

EP 3 520 294 B1

CCE1={5, 6, 7, 8}, CCE2={17, 18, 19, 20}

Frequency

| REG 12 | REG 24 | data |
| REG 11 | REG 23 | data |
| REG 10 | REG 22 | data |
| REG 9 | REG 21 | data |
| REG 8 | REG 20 | data |
| REG 7 | REG 19 | data |
| REG 6 | REG 18 | data |
| REG 5 | REG 17 | data |
| REG 4 | REG 16 | data |
| REG 3 | REG 15 | data |
| REG 2 | REG 14 | data |
| REG 1 | REG 13 | data |

908
906
904
902
PRB

Time

FIG. 9

Power

User 2

User 1

1004

1002

Time/frequency resource elements

FIG. 10

FIG. 11

1202 — Use case scenario

eMBB →

1204 — Orthogonal mapping of REGs to CCEs in the corresponding control resource set, for example, using a pre-defined rule with no overlapping

URLLC, mMTC →

1212 — Non-orthogonal mapping of REGs to CCEs (e.g., signatures) in the corresponding control resource set, for example, using a pre-defined rule having the property that some pairs of CCEs share a PRB/REG

1206 — WTRU may identify the WTRU's search space (e.g., the list of WTRU's tentative NR-PDCCH candidates) using hashing function #1:

1208 — Blind detection

1210 — WTRU-specific NR-PDCCH

UE ID or RNTI

1214 — WTRU may identify the WTRU's search space (e.g., the list of WTRU's tentative NR-PDCCH candidates) using hashing function #2

1216 — Blind detection, using interference cancellation procedure on overlapping CCEs

1218 — WTRU-specific NR-PDCCH

Design of signatures may be derived from the Steiner system

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62401052
- US 62416 A
- US 286 A
- US 62443 A
- US 198 A
- US 62474 A
- US 914 A
- EP 2439984 A1